# EUROPEAN PATENT APPLICATION

(11) **EP 4 219 348 A1**
(43) Date of publication of application: **02.08.2023**
(21) Application number: 21872472.2
(22) Date of filing: 22.09.2021
(51) Int. Cl.: B65G 1/137, G06Q 10/08

(54) **INFORMATION PROCESSING DEVICE AND SYSTEM**

(30) Priority: 23.09.2020 JP 2020158757
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KOJIMA, Hidetaka, Kawasaki-shi, Kanagawa 212-0013 (JP); AKAGI, Takuma, Kawasaki-shi, Kanagawa 212-0013 (JP)
(74) Representative: Horn Kleimann Waitzhofer Patentanwälte PartG mbB
(86) International application number: PCT/JP2021/034713
(87) International publication number: WO 2022/065343

(57) **Abstract**

An information processing apparatus and a system capable of effectively managing slips are provided. According to an embodiment, an information processing apparatus includes a first interface, a storage unit, and a processor. The first interface acquires an instruction picture indicating an article to be picked up. The storage unit stores data. The processor acquires a first ID from the instruction picture, generates feature information indicating a feature of a slip to deliver the article, generates a second ID, associates the first ID and the second ID with the feature information, and stores them in the storage unit.

## Description

### FIELD

Embodiments described herein relate generally to an information processing apparatus and a system.

### BACKGROUND

A physical distribution system has been provided. The physical distribution system picks up articles in accordance with an order list or the like, and attaches address slips to the picked articles. Such a physical distribution system indicates articles to be picked up for the operator on the screen. The physical distribution system also prints the address slips.

In addition, an apparatus to automate pickup has been provided. The apparatus acquires a picture from the physical distribution system and picks up articles with a robot.

In such an apparatus, a technique is required to properly managing address slips without newly attaching bar codes or the like to the address slips.

### Patent Literature

Patent Literature 1: PCT International Publication No. 2020/100956

### SUMMARY

### Means for Problems to be Solved

To solve the problem described above, an information processing apparatus and a system capable of effectively managing slips are provided.

### Solution to Problem

According to an embodiment, an information processing apparatus includes a first interface, a storage unit, and a processor. The first interface acquires an instruction picture indicating an article to be picked up. The storage unit stores data. The processor acquires a first ID from the instruction picture, generates feature information indicating a feature of a slip to deliver the article, generates a second ID, associates the first ID and the second ID with the feature information, and stores them in the storage unit.

### BRIEF DESCRIPTION OF THE DRAWINGS

FIG. 1 is a block diagram illustrating a configuration example of a physical distribution system according to an embodiment.
FIG. 2 is a block diagram illustrating a configuration example of a WMS according to the embodiment.
FIG. 3 is a block diagram illustrating a configuration example of a WES according to the embodiment.
FIG. 4 is a diagram illustrating an example of an instruction picture according to the embodiment.
FIG. 5 is a diagram illustrating an example of an address slip according to the embodiment.
FIG. 6 is a flowchart illustrating an operation example of the WMS according to the embodiment.
FIG. 7 is a flowchart illustrating an operation example of the WES according to the embodiment.
FIG. 8 is a flowchart illustrating an operation example of the WES according to the embodiment.
FIG. 9 is a flowchart illustrating an operation example of the WES according to the embodiment.

### DETAILED DESCRIPTION

An embodiment will be explained hereinafter with reference to drawings.

A physical distribution system according to one embodiment picks up articles from shelves or the like in a warehouse. The physical distribution system prints address slips to deliver the picked articles. The physical distribution system attaches address slips to the picked articles or vessels packing the articles. The physical distribution system supplies the articles or vessels provided with the slips to a delivery system or the like.

For example, the physical distribution system is used as a system of e-commerce.

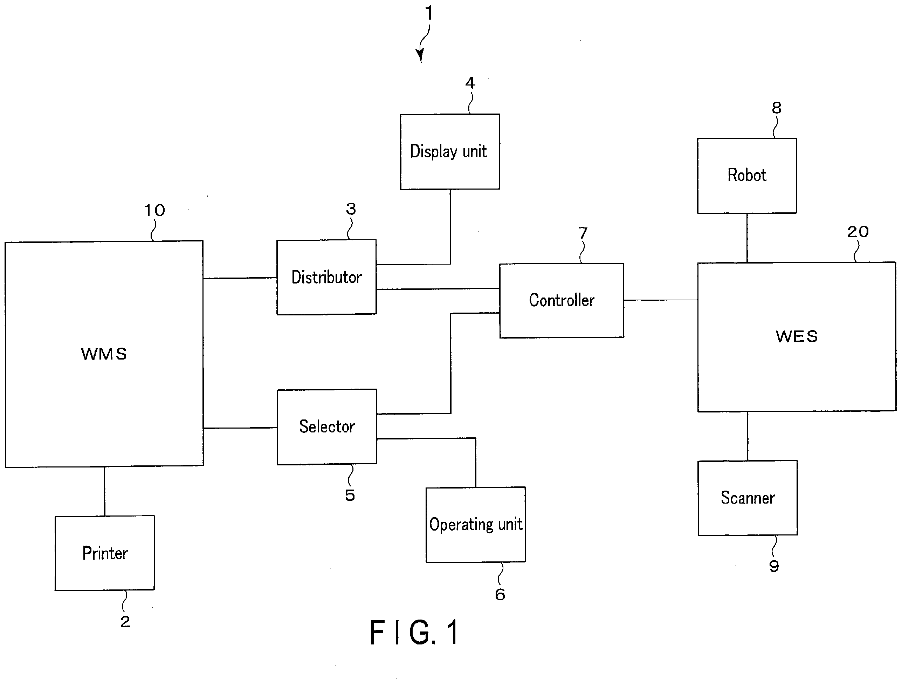

FIG. 1 illustrates a configuration example of a physical distribution system 1. As illustrated in FIG. 1, the physical distribution system 1 includes a printer 2, a distributor 3, a display unit 4, a selector 5, an operating unit 6, a controller 7, a robot 8, a scanner 9, a WMS 10, and a WES 20, and the like.

The WMS 10 is connected to the printer 2, the distributor 3, and the selector 5. The distributor 3 is connected to the display unit 4 and the controller 7. The selector 5 is connected to the operating unit 6 and the controller 7. The WES 20 is connected to the controller 7, the robot 8, and the scanner 9.

The physical distribution system 1 may further include any other necessary structures in addition to the structure illustrated in FIG. 1, or any specific structure may be excluded from the physical distribution system 1.

The WMS 10 (Warehouse Management System) (first information processing apparatus) manages the whole physical distribution system 1. The WMS 10 acquires an order list from an external apparatus or the like. The order list indicates articles to be picked up and an address to which the articles are to be delivered. The WMS 10 supplies the distributor 3 with an instruction picture indicating articles to be picked up in accordance with the order list. The WMS 10 also receives an input, such as the number of articles having been picked up, through the selector 5. The WMS 10 also prints an address slip. The WMS 10 will be described in detail below.

The WES 20 (Warehouse Management System) (information processing apparatus, second information processing apparatus) picks up articles in accordance with the instruction picture or the like. The WES 20 also sets an ID for the address slip from the WMS 10. The WES 20 will be described in detail below.

The printer 2 prints an image in accordance with control from the WMS 10. Herein, the printer 2 prints an address slip. For example, the printer 2 supplies an address slip in accordance with a predetermined format. The printer 2 prints the address and the sender and the like on the supplied address slip.

For example, the printer 2 forms an image by an inkjet method or an electrophotographic method. When address slips are formed of heat sensitive paper, the printer 2 may form an image by heating the address slip. The structure of the printer 2 is not limited to any specific structure.

The distributor 3 distributes a picture from the WMS 10 to the display unit 4 and the controller 7. Specifically, the distributor 3 acquires a signal to display a picture from the WMS 10, and supplies the signal to the display unit 4 and the controller 7. The distributor 3 may amplify or modulate the signal.

The display unit 4 displays the picture from the distributor 3. Specifically, the display unit 4 displays a picture (for example, an instruction picture) supplied from the WMS 10. For example, the display unit 4 is a liquid crystal monitor or the like.

The selector 5 supplies an operating signal from the operating unit 6 or the controller 7 to the WMS 10. Specifically, the selector 5 supplies the WMS 10 with an operating signal indicating an operation input by the operator to the operating unit 6 or an operating signal generated with the controller 7.

The operating unit 6 receives an input of various operations from the operator. The operating unit 6 transmits an operating signal indicating an input operation to the selector 5. The operating unit 6 is formed of a keyboard or a mouse.

The controller 7 has a function of a capture board capturing a picture (that is, picture from WMS 10) from the distributor 3, and a function of an emulator generating an operating signal to be supplied to the selector 5 (that is, to WMS 10).

The controller 7 acquires a picture from the distributor 3, as the function of a capture board. The controller 7 supplies the acquired display image to the WES 20.

The controller 7 also emulates an operating terminal, such as the keyboard or the mouse connected to the WMS 10, as the function of an emulator. The controller 7 supplies the WMS 10 with an operating signal similar to the operating signal input by the operator through the operating terminal, in accordance with control from the WES 20. For example, the controller 7 supplies the WMS 10 with an operating signal indicating movement or click of the mouse or a keyboard input.

The robot 8 picks up an article in accordance with control from the WES 20. The robot 8 puts the picked article into a predetermined place (such as a predetermined vessel).

For example, the robot 8 is formed of a robot arm and a robot hand attached to a distal end of the robot arm and the like. The robot 8 moves the robot hand using the robot arm to a position in which the robot hand can pick up the article. The robot 8 traps the article with the robot hand. The robot 8 moves the trapped article using the robot arm to a predetermined position. The robot 8 opens the robot hand to put the article into the predetermined position.

The robot 8 may include a structure to change robot hands according to articles. The structure of the robot 8 is not limited to any specific structure.

The scanner 9 scans an address slip printed with the WMS 10. The scanner 9 supplies image data acquired by scanning to the WES 20.

For example, the scanner 9 is set adjacent to the printer 2. The scanner 9 images an address slip ejected from the printer 2. In this case, the scanner 9 is formed of a camera or the like.

As another example, the scanner 9 may scan an address slip attached to an article. For example, the scanner 9 is set on a conveying path for articles. In this case, the scanner 9 may be formed of a line of sensors arranged in a horizontal scanning direction.

As another example, the scanner 9 may be formed of a plurality of scanners. For example, the scanner 9 may be formed of a scanner set adjacent to the printer 2 and a scanner set on a conveying path for articles provided with address slips.

The following is an explanation of the WMS 10.

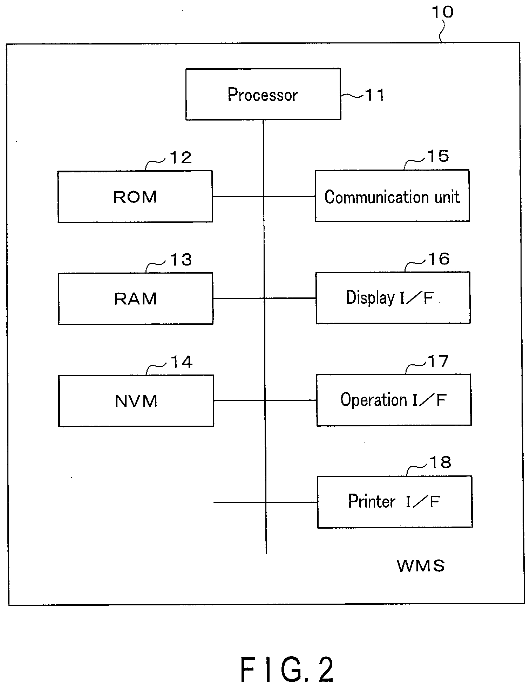

FIG. 2 illustrates a configuration example of the WMS 10 according to the embodiment. FIG. 2 is a block diagram illustrating a configuration example of the WMS 10. As illustrated in FIG. 2, the WMS 10 includes a processor 11, a ROM 12, a RAM 13, a NVM 14, a communication unit 15, a display interface 16, an operation interface 17, and a printer interface 18 and the like.

The processor 11, the ROM 12, the RAM 13, the NVM 14, the communication unit 15, the display interface 16, the operation interface 17, and the printer interface 18 are connected to each other via a data bus or the like.

The WMS 10 may include any other necessary structures in addition to the structure illustrated in FIG. 2, or any specific structure may be excluded from the WMS 10.

The processor 11 (first processor) has a function of controlling operations of the whole WMS 10. The processor 11 may include an internal cashe and various interfaces and the like. The processor 11 achieves various types of processing by executing programs stored in advance in the internal memory, the ROM 12, or the NVM 14.

Part of the various functions achieved by execution of the programs with the processor 11 may be achieved with a hardware circuit. In this case, the processor 11 controls the function executed with the hardware circuit.

The ROM 12 is a non-volatile memory storing a control program and control data and the like in advance. The control program and the control data stored in the ROM 12 are installed in advance in accordance with specifications of the WMS 10.

The RAM 13 is a volatile memory. The RAM 13 temporarily stores data being processed with the processor 11 or the like. The RAM 13 stores various application programs on the basis of commands from the processor 11. The RAM 13 may also store data necessary for execution of the application programs and execution results of the application programs.

The NVM 14 is a non-volatile memory for which writing and rewriting of data are possible. For example, the NVM 14 is formed of a HDD, a SSD, or a flash memory or the like. The NVM 14 stores a control program, applications, and various types of data according to operation use of the WMS 10.

The communication unit 15 is an interface to transmit and receive data to and from an external apparatus. For example, the communication unit 15 is an interface supporting wired or wireless LAN (Local Area Network) connection.

The display interface 16 is an interface to transmit and receive data to and from the distributor 3. The display interface 16 transmits a signal to display a picture to the distributor 3 in accordance with control from the processor 11.

The operation interface 17 is an interface to transmit and receive data to and from an input device receiving an input of operation. For example, the operation interface 17 receives an operating signal indicating an operation input to an operating terminal, such as a keyboard and a mouse. The operation interface 17 supplies the received operating signal to the processor 11. For example, the operation interface 17 supports USB (Universal Serial Bus) connection.

Herein, the operation interface 17 is connected to the selector 5. Specifically, the operation interface 17 receives an operating signal from the selector 5.

The printer interface 18 is an interface to transmit and receive data to and from the printer 2. The printer interface 18 supplies image data to be printed to the printer 2 in accordance with control from the processor 11. The printer interface 18 may supply a setting signal and the like to the printer 2 in accordance with control from the processor 11.

For example, the WMS 10 is a desktop PC or a notebook PC.

The following is an explanation of the WES 20.

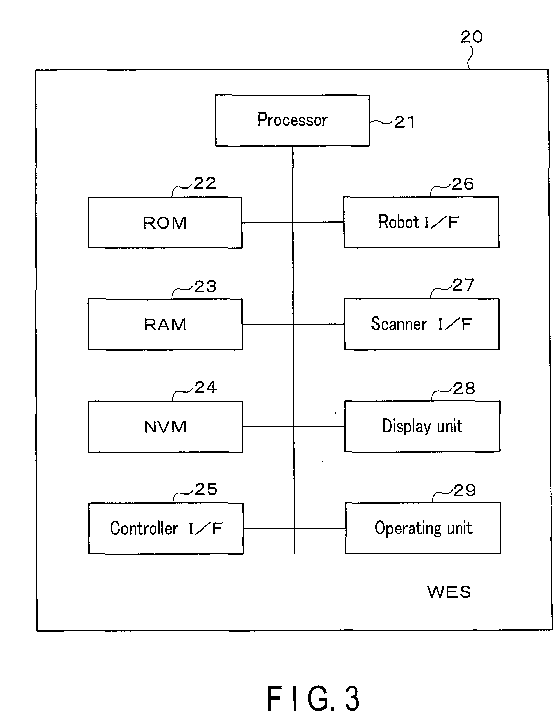

FIG. 3 illustrates a configuration example of the WES 20 according to the embodiment. FIG. 3 is a block diagram illustrating a configuration example of the WES 20. As illustrated in FIG. 3, the WES 20 includes a processor 21, a ROM 22, a RAM 23, a NVM 24, a controller interface 25, a robot interface 26, a scanner interface 27, a display unit 28, and an operating unit 29, and the like.

The processor 21, the ROM 22, the RAM 23, the NVM 24, the controller interface 25, the robot interface 26, the scanner interface 27, the display unit 28, and the operating unit 29 are connected to each other via a data bus or the like.

The WES 20 may further include any other necessary structures in addition to the structure illustrated in FIG. 3, or any specific structure may be excluded from the WES 20.

The processor 21 (second processor) has a function of controlling operations of the whole WES 20. The processor 21 may include an internal cashe and various interfaces and the like. The processor 21 achieves various types of processing by executing programs stored in advance in the internal memory, the ROM 22, or the NVM 24.

Part of the various functions achieved by execution of the programs with the processor 21 may be achieved with a hardware circuit. In this case, the processor 21 controls the function executed with the hardware circuit.

The ROM 22 is a non-volatile memory storing a control program and control data and the like in advance. The control program and the control data stored in the ROM 22 are installed in advance in accordance with specifications of the WES 20.

The RAM 23 is a volatile memory. The RAM 23 temporarily stores data being processed with the processor 21 or the like. The RAM 23 stores various application programs on the basis of commands from the processor 21. The RAM 23 may also store data necessary for execution of the application programs and execution results of the application programs.

The NVM 24 (storage unit) is a non-volatile memory for which writing and rewriting of data are possible. For example, the NVM 24 is formed of a HDD, a SSD, or a flash memory or the like. The NVM 24 stores a control program, applications, and various types of data according to operation use of the WES 20.

The controller interface 25 is an interface to transmit and receive data to and from the controller 7.

The controller interface 25 (first interface) acquires a picture from the controller 7. The controller interface 25 supplies the acquired picture to the processor 21.

The controller interface 25 causes the controller 7 to output an operating signal to the selector 5 in accordance with control from the processor 21. For example, the controller interface 25 supports USB connection.

The robot interface 26 is an interface to transmit and receive data to and from the robot 8. The robot interface 26 causes the robot 8 to pick up articles in accordance with control from the processor 21. The robot interface 26 may acquire the picked articles and the number of picked articles from the robot 8. The robot interface 26 supplies the processor 21 with the picked articles and the number of picked articles.

The scanner interface 27 (second interface) is an interface to transmit and receive data to and from the scanner 9. The scanner interface 27 causes the scanner 9 to execute scan in accordance with control from the processor 21. The scanner interface 27 also acquires image data acquired by the scan from the scanner 9. The scanner interface 27 supplies the acquired image data to the processor 21.

The display unit 28 displays various types of information by control of the processor 21. The display unit 28 is formed of a liquid crystal monitor. If the operating unit 29 is formed of a touch panel or the like, the display unit 28 may be formed as one unitary piece with the operating unit 29.

The operating unit 29 receives inputs of various operations from the operator. The operating unit 29 transmits a signal indicating the received operation to the processor 21. For example, the operating unit 29 is formed of a keyboard, a ten-key pad, and a touch panel.

For example, the WES 20 is a desktop PC or a notebook PC.

The following is an explanation of functions achieved with the WMS 10. The functions achieved with the WMS 10 are achieved by execution, with the processor 11, of the programs stored in the ROM 12 or the NVM 14 or the like.

First, the processor 11 has a function of supplying an instruction picture indicating articles to be picked up via the display interface 16.

The processor 11 acquires an order list from the external apparatus via the communication unit 15 or the like. For example, the order list indicates articles to be picked up, the number of articles to be picked up, and an address of the articles.

When the processor 11 acquires an order list, the processor 11 generates an instruction picture in accordance with the acquired order list. Herein, the instruction picture displays information relating to a business form to be packed together with the articles.

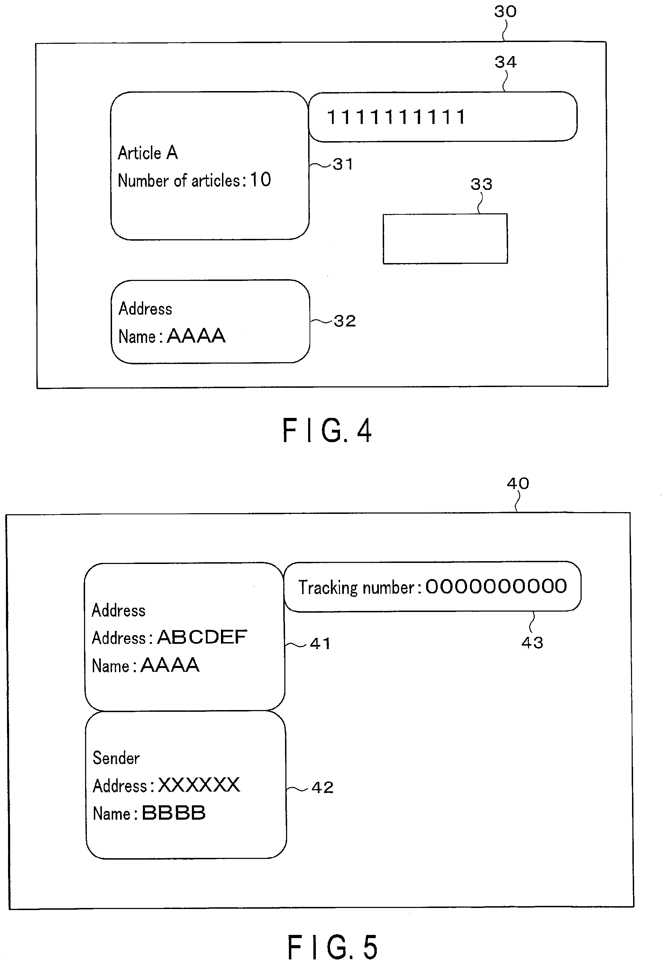

FIG. 4 illustrates an example of an instruction picture 30 generated with the processor 11. As illustrated in FIG. 4, the instruction picture 30 displays a display region 31, a display region 32, an input form 33, and a display region 34, and the like.

The display region 31 displays articles to be picked up and the number of articles to be picked up. In this example, the display region 31 indicates that 10 articles A are to be picked up. The display region 31 may indicate a plurality of types of articles.

The display region 32 displays information (entry information) entered in the address slip or part of the entry information. Herein, the display region 32 displays part of the address. As illustrated in FIG. 4, the display region 32 displays the name of the address. The contents displayed in the display region 32 is not limited to any specific structure.

The input form 33 receives an input of articles that have been picked up with the WES 20. For example, the input form 33 receives an input of the number of articles that have been picked up with the WES 20.

The input form 33 may receive an input of the number by key input. As another example, the input form 33 may receive an input of the number by a tap on an icon.

As another example, the input form 33 may receive an input indicating that pickup has been finished.

If a plurality of types of articles are to be picked up, the input form 33 may be formed of input forms corresponding to the respective types of articles.

The display region 34 displays an ID (first ID) to identify the delivery business of articles. For example, the display region 34 displays a first ID to identify the business form.

The structure of the instruction picture 30 is not limited to any specific structure.

When the instruction picture 30 is generated, the processor 11 supplies the generated instruction picture to the distributor 3 via the display interface 16. Specifically, the processor 11 supplies the generated instruction picture to the display unit 4 and the controller 7.

When the instruction picture 30 is supplied, the processor 11 receives an input to the input form 33.

In addition, the processor 11 has a function of printing the address slip using the printer 2. The processor 11 generates image data to print the address slip on the basis of the acquired order list. When the image data is generated, the processor 11 supplies the generated image data to the printer 2 via the printer interface 18.

FIG. 5 illustrates an example of an address slip 40 printed with the processor 11. As illustrated in FIG. 5, the address slip 40 includes a display region 41, a display region 42, and a display region 43.

The display region 41 is a region in which information relating to the address is to be printed. Herein, the display region 41 displays the address and the name of the address.

The display region 42 is a region in which information relating to the sender is to be printed. Herein, the display region 41 displays the address and the name of the sender.

The display region 43 is a region to print a tracking number to track the parcel to which the address slip is attached. For example, the processor 11 sets tracking numbers for address slips at random or as serial numbers.

The address slip 40 may also include a region in which information (such as the name or the number of articles) relating to the articles is to be printed. The address slip may include a region in which the delivery company name is to be printed. The structure of the address slip 40 is not limited to any specific structure.

The address slip 40 may have a structure in which the format is printed in advance. For example, in the address slip 40, frames of the display regions 41 to 43 are printed in advance. The processor 11 may print information in the frames of the display regions 41 to 43 using the printer 2.

The following is an explanation of functions achieved with the WES 20. The functions achieved with the WES 20 are achieved by execution, with the processor 21, of the programs stored in the ROM 22 or the NVM 24 or the like.

First, the processor 21 has a function of acquiring the instruction picture 30 via the controller interface 25.

As described above, the processor 11 of the WMS 10 supplies the instruction picture 30 to the controller 7.

The processor 21 acquires the instruction picture 30 from the controller 7 via the controller interface 25.

The processor 21 also has the function of acquiring the first ID from the acquired instruction picture 30.

When the instruction picture 30 is acquired, the processor 21 extracts the region (display region 34 herein) to display the first ID from the instruction picture 30, in accordance with the format or the like of the instruction picture 30. When the display region 34 is extracted, the processor 21 executes OCR (Optical Character Recognition) processing for the display region 34.

When OCR processing is executed, the processor 21 acquires the first ID on the basis of the result of the OCR processing.

The processor 21 also has a function of picking up articles on the basis of the acquired instruction picture 30.

The processor 21 extracts a region (display region 31 herein) indicating articles to be picked up from the instruction picture 30, in accordance with the format or the like of the instruction picture 30. When the display region 31 is extracted, the processor 21 executes OCR processing for the display region 31.

When OCR processing is executed, the processor 21 specifies articles to be picked up and the number of articles to be picked up, on the basis of the result of the OCR processing.

When the articles to be picked up and the number of articles to be picked up are specified, the processor 21 picks up the articles in accordance with the specified articles and the specified number of articles. Specifically, the processor 21 picks up the specified number of articles using the robot 8. The processor 21 may move the shelf storing the articles or the like using an AGV (automatic guided vehicle) or the like.

When the pickup is finished, the processor 21 inputs an operating signal to input the number of picked articles and the like to the WMS 10 using the controller 7.

If a plurality of types of articles are to be picked up, the processor 21 may input an operating signal to input the number of picked articles and the like to the WMS 10 using the controller 7 each time pickup of one type of articles is finished.

The processor 21 also has a function of scanning an address slip using the scanner 9.

When the processor 11 of the WMS 10 prints an address slip using the printer 2, the processor 21 scans the address slip using the scanner 9. The processor 21 acquires an image (address'slip image) acquired by scanning the address slip from the scanner 9.

The processor 21 also has a function of extracting feature information indicating the feature of the address slip 40 from the address slip image.

The feature information is formed of geometric information indicating a geometric feature of the address slip 40, and entry information indicating a character string entered in the address slip 40.

The processor 21 extracts labels (such as the display regions 41 to 43) of the address slip 40 from the address slip image by labeling processing or the like.

When the labels are extracted, the processor 21 executes OCR processing for each of the labels. When the OCR processing is executed, the processor 21 acquires the address (such as the name and the address), the sender (such as the name and the address), or the tracking number, as the entry information, on the basis of the result of the OCR processing.

The processor 21 also extracts geometric information from the address slip image in accordance with the predetermined algorithm. For example, as the geometric information, the processor 21 extracts a feature relating to the size of the address slip 40, the size, the position, or the color of each of the labels, or the color or the texture (for example, spatial frequency information) of the part outside the labels of address slip 40.

The processor 21 may acquire the entry information (or part of the entry information) from the instruction picture 30. For example, the processor 21 extracts the region (display region 32 herein) indicating the entry information from the instruction picture 30, in accordance with the format or the like of the instruction picture 30. When the display region 32 is extracted, the processor 21 executes OCR (Optical Character Recognition) processing for the display region 32.

When the OCR processing is executed, the processor 21 acquires the entry information (or part of the entry information) on the basis of the result of the OCR processing.

The processor 21 integrates the geometric information and the entry information to generate feature information.

The processor 21 also has a function of setting an ID (second ID) to identify the address slip 40 for the address slip 40.

The processor 21 generates a character string formed of a text, a numerical value, a sign, or a combination thereof as the second ID.

The processor 21 may generate a random character string as the second ID. The processor 21 may generate the second ID as a serial number.

As another example, the processor 21 may generate the second ID on the basis of the entry information of the address slip 40. For example, the processor 21 may generate the tracking number indicated with the entry information as the second ID. As another example, the processor 21 may generate a character string acquired by combining the delivery company name of the address slip 40 with the tracking number as the second ID.

When the second ID is generated, the processor 21 associates the first ID and the generated second ID with the extracted feature information, and store them in the NVM 24. The processor 21 may generate a table storing the first ID, the generated second ID, and the extracted feature information in association with each other.

The processor 21 also has a function of retrieving the first ID and the second ID from the address slip image.

The processor 21 acquires the address slip image of the address slip 40 using the scanner 9. Herein, the processor 21 acquires the address slip image at a step downstream from the step of setting the second ID for the address slip 40. For example, the processor 21 acquires the address slip image of the address slip 40 in a conveying path through which the articles to which the address slip 40 is attached are delivered to a predetermined place.

When the address slip image is acquired, the processor 21 extracts feature information from the address slip image. The method for extracting feature information with the processor 21 is as described above.

When the feature information is extracted, the processor 21 retrieves feature information matching with the extracted feature information from the NVM 24. When feature information matching with the extracted feature information is retrieved, the processor 21 acquires the first ID and the second ID corresponding to the retrieved feature information.

When the first ID and the second ID corresponding to the retrieved feature information are acquired, the processor 21 updates the retrieved feature information on the basis of the extracted feature information. For example, the processor 21 overwrites the geometric information of the retrieved feature information with the geometric information of the extracted feature information. The method for updating the retrieved feature information with the processor 21 is not limited to any specific method.

The following is an explanation of an operation example of the WMS 10.

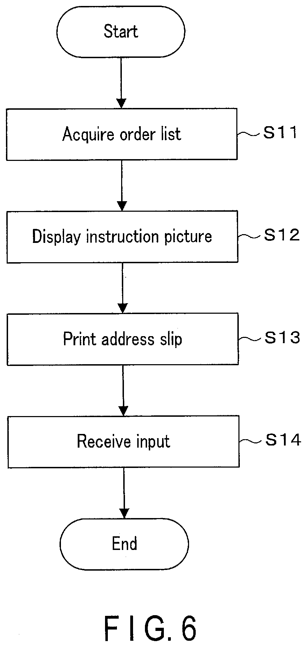

FIG. 6 is a flowchart for explaining an operation example of the WMS 10.

First, the processor 11 of the WMS 10 acquires an order list via the communication unit 15 or the like (S11). When the order list is acquired, the processor 11 supplies the instruction picture 30 to the distributor 3 on the basis of the acquired order list or the like via the display interface 16 (S12).

When the instruction picture 30 is supplied to the distributor 3, the processor 11 prints the address slip 40 on the basis of the acquired order list or the like using the printer 2 (S13). When the address slip is printed, the processor 11 receives an input, such as the number of picked articles, via the operation interface 17 (S14).

When an input, such as the number of picked articles, is received, the processor 11 ends the operation.

The following is an explanation of an operation example of the WES 20.

First, an operation example of picking up articles with the WES 20 will be explained hereinafter.

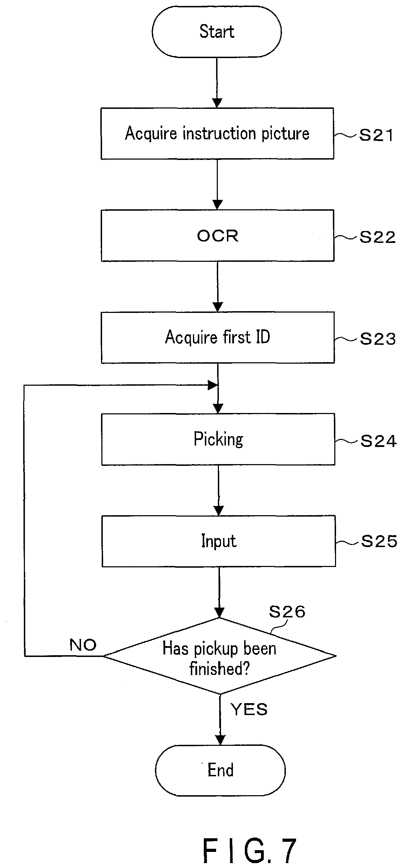

FIG. 7 is a flowchart for explaining an operation example of picking up articles with the WES 20.

First, the processor 21 of the WES 20 acquires the instruction picture 30 from the controller 7 via the controller interface 25 (S21). When the instruction picture 30 is acquired, the processor 21 executes OCR processing for the display region 31 and the display region 34 of the instruction picture 30 (S22).

When the OCR processing is executed, the processor 21 acquires the first ID on the basis of the result of the OCR processing (S23). When the first ID is acquired, the processor 11 picks up the articles using the robot 8 on the basis of the result of the OCR processing (S24). When the articles are picked up, the processor 21 inputs the number of picked articles or the like to the WMS 10 using the controller 7 (S25).

When the number of picked articles or the like is input to the WMS 10, the processor 21 determines whether pickup of the articles has been finished (S26). If it is determined that pickup of the articles has not been finished (NO at S26), the processor 21 returns to S24.

If it is determined that pickup of the articles has been finished (YES at S26), the processor 21 ends the operation.

The following is an explanation of an operation example of setting the second ID for the address slip 40 with the WES 20.

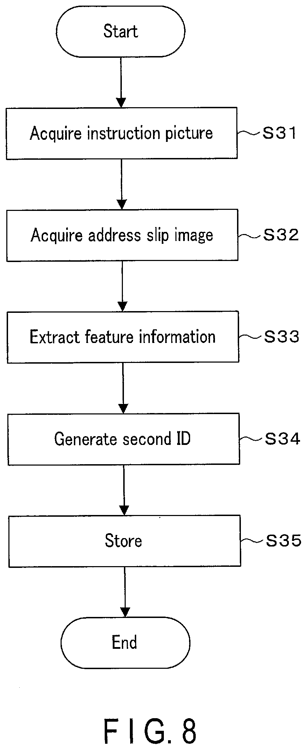

FIG. 8 is a flowchart for explaining an operation example of setting the second ID for the address slip 40 with the WES 20.

First, the processor 21 of the WES 20 acquires the instruction picture 30 from the controller 7 via the controller interface 25 (S31). The processor 21 may execute the operation of S31 as the operation of the S21.

When the instruction picture 30 is acquired, the processor 21 acquires the address slip image of the address slip 40 using the scanner 9 (S32). When the address slip image is acquired, the processor 21 extracts feature information on the basis of the address slip image and the instruction picture 30 (S33).

When the feature information is extracted, the processor 21 generates a second ID. When the second ID is generated, the processor 21 associates the generated second ID with the extracted feature information, and stores them in the NVM 24 (S35).

When the first ID, the generated second ID, and the extracted feature information are associated with each other and stored in the NVM 24, the processor 21 ends the operation.

The following is an explanation of an operation example of retrieving the first ID and the second ID with the WES 20.

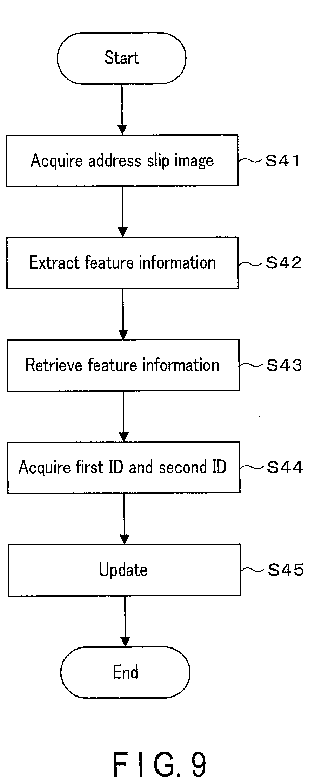

FIG. 9 is a flowchart for explaining an operation example of retrieving the first ID and the second ID with the WES 20.

First, the processor 21 of the WES 20 acquires an address slip image of the address slip 40 using the scanner 9 (S41). When the address slip image is acquired, the processor 21 extracts feature information from the address slip image (S42).

When the feature information is extracted, the processor 21 retrieves feature information matching with the extracted feature information from the NVM 24 (S43). When feature information matching with the extracted feature information is retrieved, the processor 21 acquires the first ID and the second ID corresponding to the retrieved feature information (S44).

When the first ID and the second ID corresponding to the retrieved feature information are acquired, the processor 21 updates the retrieved feature information on the basis of the extracted feature information (S45). When the retrieved feature information is updated, the processor 21 ends the operation.

The processor 11 of the WMS 10 may execute S12 after S13. As another example, the processor 11 may execute S12 and S13 simultaneously.

In addition, the instruction picture 30 may include no entry information (or part of entry information). Specifically, the instruction picture 30 may include no display region 32. In this case, the processor 21 of the WES 20 is not required to acquire the entry information from the instruction picture 30.

As another example, the processor 21 is not required to update the retrieved feature information.

As another example, the processor 21 may retrieve the first ID or the second ID.

The WES structured as described above scans an address slip. The WES extracts feature information indicating the feature of the address slip from the image or the like of the address slip. The WES associates the first ID to identify the delivery business and the second ID to identify the address slip with the extracted feature information, and stores them.

In addition, the WES scans the address slip and extracts the feature information of the address slip at a step downstream from the step of setting the second ID. The WES retrieves feature information matching with the extracted feature information. The WES acquires the first ID and the second ID corresponding to the retrieved feature information.

As a result, the WES is enabled to manage address slips without attaching bar codes or the like to the address slips.

Embodiments of the present invention described above are presented as examples, and are not intended to limit the scope of the invention. These novel embodiments can be carried out in other various forms, and various omissions, replacement, and changes are possible within a range not departing from the gist of the invention. These embodiments and modifications thereof are included in the scope and the gist of the invention, and included in the inventions described in the claims and equivalents thereof.

## Claims

1. An information processing apparatus comprising:
a first interface acquiring an instruction picture indicating an article to be picked up in a warehouse;
a second interface connected to a scanner scanning a slip to deliver the article;
a processor acquiring a first ID from the instruction picture acquired via the first interface, generating feature information indicating a feature of the slip and a second ID from an image of the slip acquired via the second interface, and associating the first ID and the second ID with the feature information; and
a storage unit storing the first ID, the second ID, and the feature information associated by the processor.

2. The information processing apparatus according to claim 1, wherein
the processor extracts entry information entered in the slip from the image of the slip by OCR processing, and
the feature information includes the entry information.

3. The information processing apparatus according to claim 1 or 2, wherein the feature information includes geometric information indicating a geometric feature of the slip.

4. The information processing apparatus according to claim 2, wherein the entry information includes an address.

5. The information processing apparatus according to claim 2 or 4, wherein the processor generates the second ID based on the entry information.

6. The information processing apparatus according to claim 1, wherein the processor acquires a second image of the slip using the scanner after associating the first ID and the second ID with the feature information, extracts the feature information from the second image, retrieves feature information matching with the feature information extracted from the second image from the storage unit, and acquires the first ID or the second ID corresponding to the retrieved feature information.

7. The information processing apparatus according to claim 6, wherein the processor updates the retrieved feature information, based on the feature information extracted from the second image.

8. A system formed of a first information processing apparatus and a second information processing apparatus,
the first information processing apparatus including:
a display interface outputting an image;
a printer interface connected to a printer; and
a first processor outputting an instruction picture indicating an article to be picked up via the display interface, and printing a slip to deliver the article using the printer,
the second information processing apparatus including:
a first interface acquiring the instruction picture;
a second interface connected to a scanner scanning the slip;
a second processor acquiring a first ID from the instruction picture acquired via the firstinterface, generating feature information indicating a feature of the slip and a second ID from an image of the slip acquired via the second interface, and associating the first ID and the second ID with the feature information; and
a storage unit storing the first ID, the second ID, and the feature information associated by the second processor.
